# EUROPÄISCHE PATENTANMELDUNG

(11) **EP 2 273 151 A1**
(43) Veröffentlichungstag der Anmeldung: **12.01.2011**
(21) Anmeldenummer: 09405113.3
(22) Anmeldetag: 10.07.2009
(51) Int. Cl.: F16F 15/08, G04B 31/02

(54) **Schockabsorbierende Lagerung für Präzisionsinstrumente**

(71) Anmelder: Gneuss, Thomas, 4820 Bad Ischl (AT)
(72) Erfinder: Gneuss, Thomas, 4820 Bad Ischl (AT)
(74) Vertreter: Frei Patent Attorneys

(57) **Zusammenfassung**

In einer schockabsorbierenden Lagervorrichtung (1) für Präzisionsinstrumente, ist ein Innengehäuse (11) bezüglich eines Aussengehäuses (12) über mehrere Lager (14) beweglich gelagert. Dabei weist ein Lager (14) jeweils am Innengehäuse (11) (respektive am Aussengehäuse (12)) einen Lagerkörper (111) und am Aussengehäuse (12) (respektive am Innengehäuse (11)) eine Lagerfläche (121) auf, wobei
■ der Lagerkörper (111) und die Lagerfläche (121) einander berühren;
■ relativ zueinander sowohl translatorisch als auch rotatorisch bewegbar sind; und
■ entweder der Lagerkörper (111) oder die Lagerfläche (121) oder beide jeweils federnd am entsprechenden Gehäuseteil angeordnet sind; und

## Beschreibung

Die Erfindung bezieht sich auf das Gebiet der Lagerung von mechanischen Präzisionsinstrumenten, und insbesondere auf eine schockabsorbierende Lagerung für Präzisionsinstrumente gemäss dem Oberbegriff des Patentanspruches 1.

### STAND DER TECHNIK

Eine derartige schockabsorbierende Lagerung für Präzisionsinstrumente ist beispielsweise aus der Uhrenmacherei bekannt, indem ein Uhrwerk in einem Uhrengehäuse mittels Gummielementen gelagert wird. Bekannte Systeme haben aber den Nachteil, dass die Bewegung der Uhrwerke nicht ausreichend von der Bewegung des Gehäuses abgekoppelt ist, so dass Stösse in bestimmte Richtungen, oder Stösse, die eine bestimmte Beschleunigung überschreiten, nicht aufgefangen werden. Beispielsweise treten bei mechanischen Armbanduhren bei bestimmten Tätigkeiten (Golf oder Tennis spielen, Holz hacken, etc.) Impulsbelastungen auf, welche das Uhrwerk schädigen. Solche Schäden können sich schleichend aufsummieren und die Gangabweichung der Uhr mit der Zeit erhöhen.

### DARSTELLUNG DER ERFINDUNG

Es ist deshalb Aufgabe der Erfindung, eine schockabsorbierende Lagerung für Präzisionsinstrumente der eingangs genannten Art zu schaffen, welche die oben genannten Nachteile behebt.

Diese Aufgabe löst eine schockabsorbierende Lagerung für Präzisionsinstrumente mit den Merkmalen des Patentanspruches 1.

Es liegt also eine schockabsorbierende Lagerung für Präzisionsinstrumente vor, mit einem Innengehäuse zur Halterung einer stossempfindlichen Einheit und mit einem Aussengehäuse zur Lagerung des Innengehäuses, wobei das Innengehäuse bezüglich des Aussengehäuses bewegbar ist, und das Innengehäuse bezüglich des Aussengehäuses über Lager gelagert ist. Dabei weist ein Lager jeweils einen Lagerkörper und eine Lagerfläche aufweist, wobei
- jeweils in einem Lager der Lagerkörper und die Lagerfläche einander berühren;
- der Lagerkörper und die Lagerfläche relativ zueinander sowohl translatorisch als auch rotatorisch bewegbar sind;
- der Lagerkörper an einem ersten Gehäuseteil und die Lagerfläche an einem zweiten Gehäuseteil angeordnet ist;
- entweder der Lagerkörper oder die Lagerfläche oder beide jeweils federnd am entsprechenden Gehäuseteil angeordnet sind; und
- entweder der erste Gehäuseteil gleich dem Innengehäuse und der zweite Gehäuseteil gleich dem Aussengehäuse, oder der erste Gehäuseteil gleich dem Aussengehäuse und der zweite Gehäuseteil gleich dem Innengehäuse ist.

Mit andere Worten: es ist entweder (i) der Lagerkörper am Innengehäuse und die Lagerfläche am Aussengehäuse, oder es ist (ii) der Lagerkörper am Aussengehäuse und die Lagerfläche am Innengehäuse angeordnet. Im folgenden wird die Erfindung jeweils im Sinne von Variante (i) beschrieben, es versteht sich jedoch, dass die Ausführungen analog auch für Variante (ii) gelten.

Das Innengehäuse kann vorzugsweise seine Lage bezüglich des Aussengehäuses in sechs Achsen frei ändern, das heisst, sowohl translatorische als auch rotatorische Bewegungen durchführen. Dabei führt beispielsweise eine Rotation in einem der Lager zu einer Drehung um den Auflagepunkt, und in anderen Lagern zu einer Verschiebung des Auflagepunktes. In anderen bevorzugten Ausführungsformen der Erfindung ist die gegenseitige Lage in weniger als sechs Freiheitsgraden änderbar, jedoch immer um mehr als drei Freiheitsgrade.

Vorzugsweise bewirkt bei einer Bewegung der Lagerkörper bezüglich der Lagerfläche aus einer Ruhelage die federnde Anordnung von mindestens einem von Lagerkörper und Lagerfläche eine Rückstellkraft zurück in die Ruhelage. Mit anderen Worten: Die Rückstellkraft bewirkt eine Relativbewegung zwischen Lagerkörper und Lagerfläche, welche zur relativen Position von Lagerkörper und Lagerfläche entsprechend der Ruhelage führt. Die elastische Abfederung der Lagerkörper kann mittels Federn, Elastomerelementen, Gasdruckfedern, o.ä. realisiert sein. Die Materialien an den Kontaktstellen zwischen Lagerkörper und Lagerfläche sind vorzugsweise nicht elastisch (also aus Metall, Keramik, je nach Anwendung auch aus einem Hartkunststoff z.B. wie PAM (Polyamid), Kunststoffen wie Duromere oder Thermoplaste) und bilden eine Materialpaarung, welche ein im Wesentlichen abriebfreies Gleiten ermöglichen.

Vorzugsweise umschliesst wobei das Aussengehäuse das Innengehäuse ringartig, und sind mindestens drei Lager zwischen Aussengehäuse und Innengehäuse angeordnet. Die Lager überbrücken dabei einen Spalt zwischen Innengehäuse und Aussengehäuse. Die Lager definieren, mittels der Rückstellkräfte in Richtung der Ruhelage, die Relativposition des Innengehäuses im Aussengehäuse in der Ruhelage.

In einer bevorzugten Ausführungsform der Erfindung weist in einem Lager die Lagerfläche eine schalenförmige Fläche auf, und berührt der Lagerkörper die Lagerfläche an einer Lagerstelle, und verschiebt sich beim Bewegen der des Lagerkörpers bezüglich der Lagerfläche die Lagerstelle auf der Lagerfläche (Die Lagerstelle ist also keine fixe Stelle auf Lagerkörper oder Lagerfläche, sondern der Ort der Berührung der beiden. Vorzugsweise ist die Lagerstelle annähernd punktförmig). Die Lagerfläche weist beispielsweise eine ellipsioidale Form auf, kann aber auch eine andere Form aufweisen, wobei vorzugsweise die Krümmung der Lagerfläche in jeder Richtung jeweils kleiner ist als jene des Lagerkörpers, so dass nur eine einzige Lagerstelle im Lager resultiert.

Vorzugsweise ist der Lagerkörper bezüglich des ersten Gehäuseteils um eine erste Lagerachse linear verschiebbar gelagert, und kann somit, dank der Federung, in das erste Gehäuseteil einfedern. In einer weiteren Ausführungsform der Erfindung ist der Lagerkörper zudem bezüglich des ersten Gehäuseteils um eine zweite Lagerachse, welche senkrecht zur ersten Lagerachse verläuft, drehbar gelagert. Damit kann der Lagerkörper auch an der Lagerfläche abrollen.

Somit erlaubt ein Lager jeweils, dass
- bei einer translatorischen Relativbewegung zwischen Lagerkörper und Lagerfläche in eine erste Richtung senkrecht zur ersten Lagerachse sich die Lagerstelle entlang der ersten Richtung verschiebt, und
- bei einer translatorischen Relativbewegung in eine zweite Richtung, welche senkrecht zur ersten Lagerachse und senkrecht zur ersten Richtung verläuft, sich (i) die Lagerstelle entlang der zweiten Richtung verschiebt, und/oder (ii) sich der Lagerkörper um die zweite Lagerachse dreht.

Dabei ist im Fall (ii) die Federung der Lagerkörper dergestalt, dass auch bei einer Drehung um die zweite Lagerachse der Lagerkörper durch die Federung in die Ruhelage zurückgetrieben wird.

In einer bevorzugten Ausführungsform der Erfindung weist ein Lagerkörper am Bereich seiner Aussenfläche, der als Lager wirkt, die Form eines räumlichen Ellipsoids auf. Um an der Lagerfläche abrollen zu können, ist die Form insbesondere jene eines räumlichen Ellipsoids mit einer Rotationssymmetrie, wobei die entsprechende Rotationsachse mit der zweiten Lagerachse koinzidiert.

Vom Schwerpunkt (in der Regel auch der Mittelpunkt) des Innengehäuses aus gesehen kann, zu jedem Lager, eine Linie zur entsprechenden Lagerstelle gedacht werden. Eine Drehung des Innengehäuses um den Schwerpunkt würde, falls die Lagerkörper nicht einfedern würden, eine Drehung der Lagerstellen um einen Radius entsprechend dem Abstand zum Schwerpunkt führen. Gemäss der Erfindung sind die Lagerflächen stärker gekrümmt als diesem Radius entspricht, so dass die Lagerkörper zum Einfedern gezwungen werden. Dadurch entsteht jeweils eine Gegenkraft, welche das Innengehäuse zurück zur Ruhelage treibt. Bei einer translatorischen Verschiebung wird bei einigen Lagern der Lagerkörper ebenfalls einfedern, und bei gegenüberliegenden Lagern nach aussen gleiten.

In einer bevorzugten Ausführungsform der Erfindung weist die Lagervorrichtung elastische Anschlagelemente zur Begrenzung der Relativbewegung zwischen Lagerkörper und Lagerfeder auf. Beispielsweise ist dies ein Ring aus Gummi oder einem Elastomerkunststoff, welcher zwischen Innengehäuse und Aussengehäuse angeordnet ist.

In einer weiteren Ausführungsform der Erfindung ist ein Gehäuse, welches das Innengehäuse umschliesst, mit einem Öl, beispielsweise einem Silikonöl, gefüllt. Dadurch wird die Bewegung zusätzlich gedämpft und das Gleiten der Lagerkörper auf den Lagerflächen verbessert.

In einer bevorzugten Ausführungsform der Erfindung weist die Lagervorrichtung eine Stelleinheit auf, welche es erlaubt, Kräfte und Bewegungen durch das Aussengehäuse hindurch auf einen Mechanismus im Innengehäuse zu übertragen. Typisches Beispiel hierfür ist eine Aufzugswelle oder eine Richtwelle einer Uhr, welche zur Justierung der Uhr eine Kraft respektive Bewegung entlang der Richtung der Welle, sowie ein Drehmoment respektive eine Drehbewegung um die Welle von einer Krone an ein Uhrwerk überträgt.

Die Stelleinheit ist also mit einem Innenstück beweglich gelagert am Innengehäuse angeordnet und mit einem Aussenstück beweglich gelagert am Aussengehäuse angeordnet, und ist zum Übertragen von Kräften und Bewegungen vom Aussenstück an das Innenstück und umgekehrt eingerichtet. Dabei
- weist die Stelleinheit eine Kupplungsvorrichtung auf, und
- ist die Kupplungsvorrichtung, dazu eingerichtet, falls eine zwischen Innenstück und Aussenstück wirkende Kraft (oder ein korrespondierendes Drehmoment) ein bestimmtes Mass überschreitet, eine Verbindung zwischen Innenstück und Aussenstück zu lösen.

Diese Stelleinheit gemäss der Erfindung wird vorteilhafterweise zusammen mit den oben beschriebenen Lagern eingesetzt. Dabei tritt sie, in einer symmetrischen Anordnung der Lager, beispielsweise entlang des Umfanges eines Innengehäuses, an die Stelle eines der Lager. In einer anderen Anordnung der Stelleinheit ist sie für den Normalbetrieb abkoppelbar, und geschieht in diesem Normalbetrieb die Lagerung nur mittels der oben beschriebenen Lagern. Das Abkoppeln geschieht dabei beispielsweise durch Auseinanderziehen einer magnetisch zusammengehalten Kuppung der Stelleinheit.

In anderen bevorzugten Ausführungsformen der Erfindung ist die Stelleinheit unabhängig von den hier beschriebenen Lagern, also mit anderen Lagervorrichtungen realisiert.

Die Stelleinheit ist vorzugsweise in einem eingekuppelten Zustand zur Übertragung von translatorischen Stellkräften in Richtung einer Wellenachse eingerichtet, wobei bei gelöster Verbindung (oder einem ausgekuppelten Zustand) zwischen Innenstück und Aussenstück diese entlang der Wellenachse relativ zueinander linear verschiebbar sind. Das Lösen oder Auskuppeln geschieht dabei durch Überwinden einer bestimmten Maximalkraft in Richtung der Wellenachse, wie sie beispielsweise bei einem Schlag auf das Aussengehäuse auftritt.

Vorzugsweise ist die Stelleinheit in einem eingekuppelten Zustand auch zur Übertragung von rotatorischen Stellkräften um die Wellenachse eingerichtet, und sind bei gelöster Verbindung zwischen Innenstück und Aussenstück diese um die Wellenachse relativ zueinander verdrehbar. Das Lösen geschieht dabei durch Überwinden eines bestimmten Maximalmomentes um die Wellenachse, wie sie beispielsweise bei einem Schlag auf das Aussengehäuse auftritt.

Vorzugsweise koinzidieren ferner in der Ruhelage, d.h. im eingekuppelten Zustand der Stelleinheit eine Drehachse des Innenstückes und eine Drehachse des Aussenstückes miteinander und mit der Wellenachse, und koinzidieren bei gelöster Verbindung zwischen Innenstück und Aussenstück die Drehachse des Innenstückes und die Drehachse des Aussenstückes *nicht* miteinander.

Insgesamt ist also, bei maximaler gegenseitiger Beweglichkeit, bei gelöster Verbindung eine gegenseitige Verschiebung zwischen Innenstück und Aussenstück um drei translatorische Achsen und eine Verdrehung um drei Drehachsen möglich.

Vorzugsweise weist die Stelleinheit eine erste Kupplung und eine zweite Kupplung auf, wobei die erste Kupplung das Innenstück an das Zwischenstück koppelt, und die zweite Kupplung das Zwischenstück an das Aussenstück koppelt, und
- sich die erste Kupplung bei zu hohen Zugkräften entlang der Wellenachse und bei zu hohen seitlichen Kräften senkrecht zur Wellenachse löst, und
- sich die zweite Kupplung bei zu hohen Druckkräften entlang der Wellenachse löst.

Die erste Kupplung kann dabei, wie im Folgenden beschrieben, eine Innenkupplung sein, und die zweite Kupplung eine Aussenkupplung. Das Innenstück führt in das Innengehäuse und das Aussenstück in oder durch das Aussengehäuse. Analog dazu kann natürlich die Reihenfolge von erster und zweiter Kupplung umgekehrt sein.

In einer bevorzugten Ausführungsform der Erfindung ist die erste Kupplung durch magnetische Anziehungskraft in Richtung der Wellenachse zusammengehalten. Beim Überschreiten dieser Anziehungskraft bei Zugbelastung in Richtung der Wellenachse löst sich diese Kupplung. Dabei liegen ein inneres Kupplungselement der Innenkupplung und ein äusseres Kupplungselement der Innenkupplung einander gegenüber und weist mindestes eines dieser beiden Kupplungselemente mindestens einen ersten Permanentmagneten auf, der das gegenüberliegende Kupplungselement anzieht. Das gegenüberliegende Kupplungselement ist dazu aus einem ferromagnetischen Material gefertigt oder weist selber auch mindestens einen weiteren Permanentmagneten auf, welche korrespondierend zu dem mindestens einen ersten Permanentmagneten angeordnet ist.

Es liegt somit zwischen den beiden Kupplungselementen ein magnetischer Kraftschluss vor, vorzugsweise auch ein Formschluss entsprechend einer magnetisch vorgespannten Einrastverbindung. Die Kupplung ist somit eine bedingt kraftschlüssige Kupplung, d.h. sie bleibt eingekuppelt, bis eine übertragene Kraft und/oder ein Moment einen bestimmten Wert überschreitet. Dann kuppelt sie aus und überträgt keine weiteren respektive keine höheren Kräfte oder Momente mehr.

Zur Abschirmung des Innengehäuses respektive einer darin angeordneten Mechanik, kann eine Schicht aus ferromagnetischem Material mit vorzugsweise möglichst hoher Permeabilität, z.b. Mu-Metall (Permalloy), Baustahl ST58, welche zwischen dem inneren Kupplungselement der Innenkupplung und dem Innengehäuse angeordnet sein, beispielsweise ein Plättchen von 0.5 mm Dicke..

Vorzugsweise weist zur Realisierung des Formschlusses die erste Kupplung an einer ersten Kupplungsfläche Einrastelemente auf, welche in Einrastvertiefungen einer gegenüberliegenden zweiten Kupplungsfläche einrasten und welche sich bei zu hohen seitlichen Kräften senkrecht zur Wellenachse lösen. Die Einrastelemente sind vorzugsweise federnd gelagert und können selber Permanentmagnete sein oder Permanentmagnete aufweisen. Es ist aber auch möglich, Permanentmagnete starr an einem der Kupplungselemente anzuordnen, und die Einrastelemente nicht magnetisch auszugestalten.

In einer bevorzugten Ausführungsform der Erfindung weisen die innere Kupplungsfläche der Innenkupplung und die äussere Kupplungsfläche der Innenkupplung die Form von Kugelsegmenten auf. Vorzugsweise sind zudem die beiden Flächen in der Ruhelage konzentrisch zueinander angeordnet und erlauben somit eine gegenseitige Verdrehung um den gemeinsamen Mittelpunkt. Vorzugsweise ist, bei Verwendung der oben beschriebenen Lager oder auch von anderen Lagern, dieser Mittelpunkt auch identisch mit einem Mittelpunkt der Bewegung, der durch die Lager der Lagervorrichtung definiert ist. Damit fügt sich der Bewegungsmöglichkeit der ersten Kupplung in die Geometrie der Bewegung der Lager ein.

In einer bevorzugten Ausführungsform der Erfindung wird auch die zweite Kupplung durch magnetische Anziehungskraft zusammengehalten wird, bildet also einen magnetischen Kraftschluss und optional auch einen Formschluss. Alternativ kann auch eine nichtmagnetische Kupplung vorliegen, beispielsweise nur mit einem Formschluss durch ein gefedertes Rastelement, welches sich bei Überschreiten einer zu hohen Kraft entlang der Wellenachse löst. Vorzugsweise wirkt die zweite Kupplung vor allem zum Absorbieren von Stössen, welche nicht in der ersten Kupplung abgefangen werden. Jedoch ist auch eine Redundanz zur ersten Kupplung (und weiteren Federelementen in der kinematischen Kette zwischen Ausssenstück und Innenstück respektive dem Mechanismus, wie z.B. einem Uhrwerk, im Innengehäuse) möglich.

Vorzugsweise weisen die innere Kupplungsfläche der Aussenkupplung und die äussere Kupplungsfläche der Aussenkupplung zueinander konzentrische und gegeneinander gerichtete Zylinderflächen auf. Damit ist eine (Schock-)Bewegung entlang der Zylinderachse absorbierbar. Vorzugsweise sind die Zylinderflächen Rotationszylinderflächen. Dann ist zusätzlich auch eine Bewegung um die Zylinderachse herum absorbierbar.

Vorzugsweise ist die innere Kupplungsfläche der Aussenkupplung an einem inneren Kupplungselement der Aussenkupplung ausgebildet, und ist die äussere Kupplungsfläche der Aussenkupplung an einem äusseren Kupplungselement der Aussenkupplung ausgebildet, und sind an den beiden Kupplungselementen, der Aussenkupplung Permanentmagneten angeordnet, welche einen lösbaren magnetischen Kraftschluss zwischen den beiden Kupplungselementen bilden.

Vorzugsweise sind ferner die Permantentmagnete konzentrisch um eine gemeinsame Achse der beiden Kupplungsflächen der Aussenkupplung angeordnet, und bilden diese Permantentmagnete jeweils Paare von Permanentmagneten, wobei jeweils zwei Permanentmagnete eines Paares einander gegenüberstehen, wobei einer der zwei Permanentmagnete im inneren Kupplungselement der Aussenkupplung und der andere im äusseren Kupplungselement der Aussenkupplung angeordnet ist. Die Permanentmagnete können dabei als mehrere Paare einzelner Magnete in konzentrischen Anordnungen vorliegen, oder als konzentrische Ringmagnete.

Die verwendeten Magnete sind typischerweise Hochleistungsmagnete mit Magnetwerkstoffen aus, zum Beispiel, Verbindungen, welche Elemente der Seltenen Erden enthalten. Vorzugsweise werden bekannte Hochenergie-Magnetwerkstoffe wie Samarium-Cobalt oder Neodym-Eisen-Bor verwendet..

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine perspektivische Ansicht einer Lagervorrichtung in einer Anwendung zur Lagerung eines Uhrwerks, mit aufgeschnittenem Aussengehäuse;
- Figur 2: ein Innengehäuse der Lagervorrichtung; mit den mit bewegten Elementen;
- Figur 3: das Zusammenspiel von Lagerkörpern mit dem Aussengehäuse;
- Figur 4: eine Detailansicht eines Lagers mit aufgeschnittenem Aussengehäuse;
- Figur 5: eine weitere, schematische Detailansicht mit Elementen eines Lagers;
- Figur 6: eine Stelleinheit;
- Figur 7: die Stelleinheit, wobei einige Komponenten entfernt sind;
- Figur 8: die Stelleinheit in einem Längsschnitt;
- Figur 9: ein Zwischenstück der Stelleinheit; und
- Figur 10: ein Innenstück der Stelleinheit.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

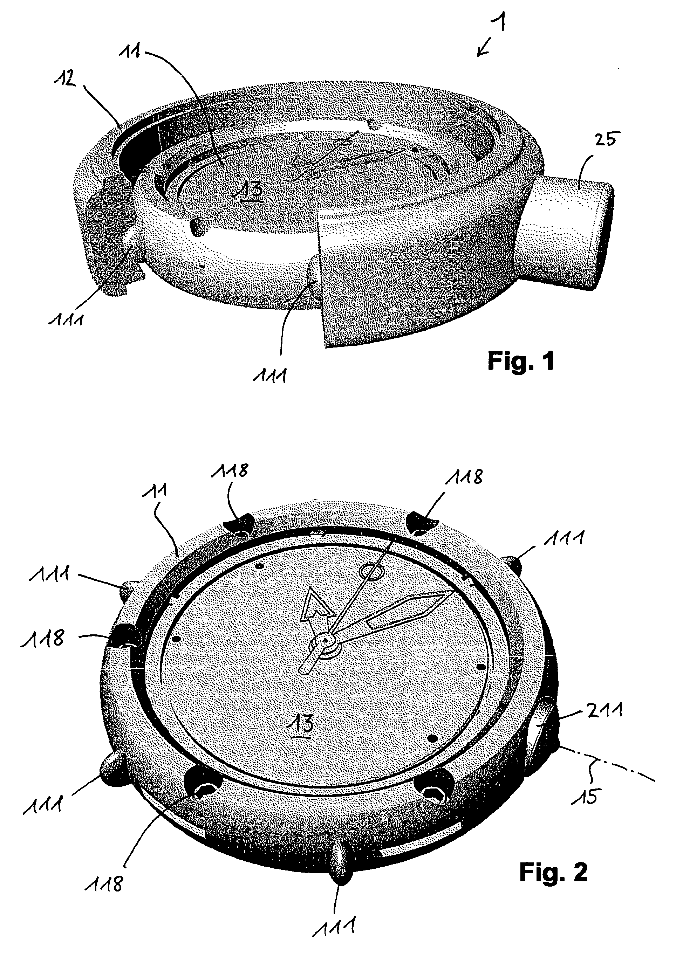

**Figur 1** zeigt eine Übersicht über die Elemente der Erfindung in einer bevorzugten Ausführungsform. In einer Lagervorrichtung 1 sind ein Innengehäuse 11 und ein Aussengehäuse 12 beweglich zueinander angeordnet. Typischerweise trägt das Innengehäuse 11 eine stossempfindliche Einheit 13 und ist das Innengehäuse 11 bezüglich des Aussengehäuses 12 gelagert und soll gegen Stösse, die am Aussengehäuse 12 auftreten, geschützt werden. Die stossempfindliche Einheit 13 ist beispielsweise ein Uhrwerk oder eine andere feinmechanisches Vorrichtung. Ein Uhrwerk kann als separater Block in das Innengehäuse 11 eingesetzt sein, oder es können die nachfolgend beschriebenen Lagerelemente am Uhrwerk selber ausgebildet sein, so dass also die tragenden Teile des Uhrwerkes auch das Innengehäuse 11 bilden. Das Aussengehäuse 12 umschliesst das Innengehäuse ringartig, ist aber der besseren Darstellung wegen in der **Figur 1** aufgeschnitten dargestellt.

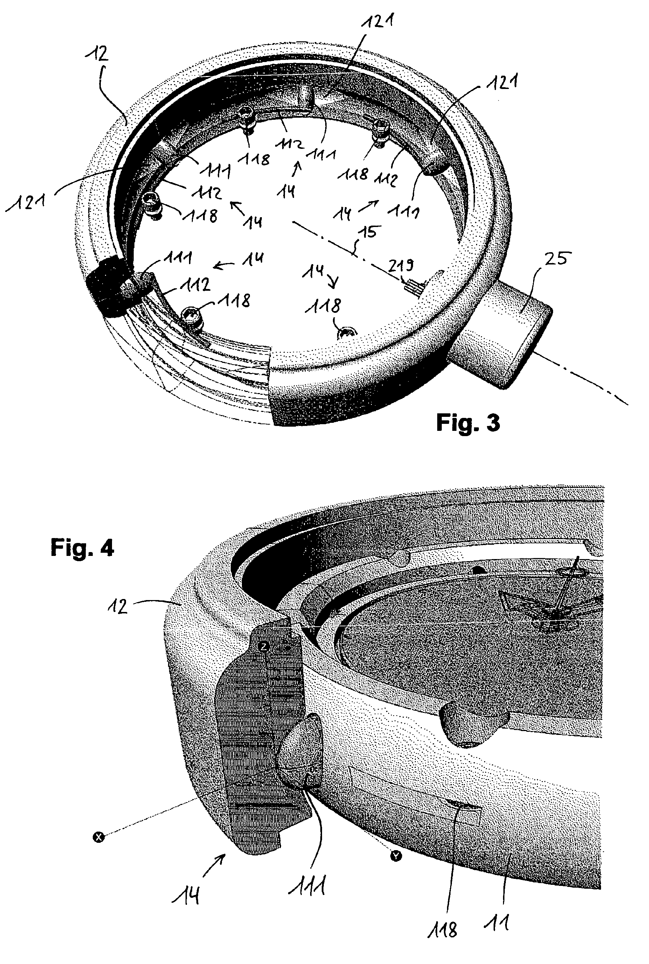

Die **Figuren 2** bis **5** zeigen die einzelnen Elemente der Lagervorrichtung 1 in verschiedenen Ansichten: An mindestens drei Stellen der Lagervorrichtung 1 sind Lager 14 angeordnet, welche zur Lagerung des Innengehäuses 11 zusammenwirken. **Figur 3** zeigt dieses Zusammenwirken, indem das Innengehäuse 11 nicht dargestellt ist, aber Lagerkörper 111, Lagerfedern 112 und Exzenterschrauben 118, welche im oder am Innengehäuse 11 angeordnet sind, jedoch schon. In einem Sektor des ringartigen Aussengehäuses 12 ist dessen Kontur durch Gitternetzlinien dargestell. In jedem der Lager 14 wirkt ein am Innengehäuse 11 elastisch beweglich angeordneter Lagerkörper 111 mit einer am Aussengehäuse 12 angeordneteten Lagerfläche 121 zusammen. Der Lagerkörper 111 wird mittels einer Lagerfeder 112 vom Innengehäuse 11 aus gegen die Lagerfläche 121 gedrückt. In einer Ruhelage des Innengehäuses 11 bezüglich des Aussengehäuses 12 sind die Lagerfedern 112 leicht vorgespannt. Die Vorspannung der Lagerfeder 112 gegen den Lagerkörper 111 ist mittels einer Exzenterschraube 118, welche mit einer Exzenterfläche gegen die Lagerfeder 112 drückt, einstellbar. Die Lagerkörper 111 sind bezüglich der Lagerflächen 121 beweglich, beispielsweise indem sie an den Lagerfläche 121 gleiten und/oder abrollen können. Damit können also die Lagerkörper 111 sich translatorisch bezüglich der Lagerflächen 121 bewegen und/oder sich (zusammen mit dem Innengehäuse 11) bezüglich der Lagerflächen 121 drehen. In einer anderen Ausführungsform der Erfindung sind die Lagerkörper 111 auch innerhalb des Innengehäuses 11 drehbar und können somit an den Lagerflächen 121 abrollen.

Die Form der Lagerkörper 111 und der Lagerflächen 121 ist vorzugsweise derart, dass die Lagerkörper 111 eine Punktauflage auf den Lagerflächen 121 bilden. Beispielsweise sind dazu sowohl die konvexen Lagerkörper 111 als auch die konkaven Lagerflächen 121 gekrümmt, wobei die Lagerkörper 111 stärker als die Lagerflächen 121 gekrümmt sind. Die Lagerkörper 111 weisen im gezeigten Beispiel, an den den Lagerflächen 121 zugewandten Seiten, die Form eines räumlichen Ellipsoids auf. Die Lagerflächen 121 sind derart stark gekrümmt, dass bei einer Auslenkung des Innengehäuses 11 aus der Ruhelage durch Translation oder Rotation mindestens einer der Lagerkörper 111 gegen die Kraft seiner Lagerfeder 112 in das Innengehäuse 11 gedrückt wird. Umgekehrt treibt dann diese Kraft das Innengehäuse 11 wieder zur Ruhelage zurück. Die Lagerflächen 121 weisen im ebenfalls eine annähernd ellipsoidale Form auf, vorzugsweise weist aber die Krümmung (oder auch die Richtung einer Flächennormalen) der Lagerfläche 121 in einem Mittelpunkt oder Ruhepunkt 123 eine Unstetigkeit 122 auf, wobei der Ruhepunkt 123 der Lage der Punktauflage des Lagerkörpers 111 in der Ruhelage entspricht. Dadurch rastet der Lagerkörper 111 im Ruhepunkt 123 ein und ist die Ruhelage - über die Einrastung aller Lager 14 - klar definiert. Die Unstetigkeit im Ruhepunkt 123 kann durch einen Schnittpunkt von zwei linearen Unstetigkeiten 122 gebildet sein.

In der gezeigten bevorzugten Ausführungsform der Erfindung ist der Innenradius der Lagerfläche 121 bei einem Schnitt in z-Richtung (senkrecht zur Ebene des Uhrwerkes) nur um ein Weniges grösser als der Aussenradius des Lagerkörpers 111. Bei einer gegenseitigen Verschiebung in z-Richtung tritt also schon bei einer relativ kleinen Verschiebung - verglichen mit einer Bewegung in y-Richtung - zwischen Innengehäuse 11 und Aussengehäuse 12 eine relativ grosse Verschiebung des Lagerkörpers 111 in das Innengehäuse 11 hinein statt (also entlang der x-Richtung), und damit eine relativ grosse Gegenkraft respektive Rückstellkraft. Somit werden Auslenkungen in z-Richtung schon alleine durch die Federkraft stark gehemmt.

Die Lagerflächen 121 (oder das gesamte Innengehäuse 11) und/oder die Lagerkörper 111 werden vorzugsweise mittels eines Sinterverfahrens hergestellt, da dies eine freie Gestaltung der Form zulässt; oder mit PIM-Technologie (Powder Injection Moulding), MIM (Metal Injection Moulding), CIM (Ceramic Injection Moulding) oder andere Fertigungstechnologien.

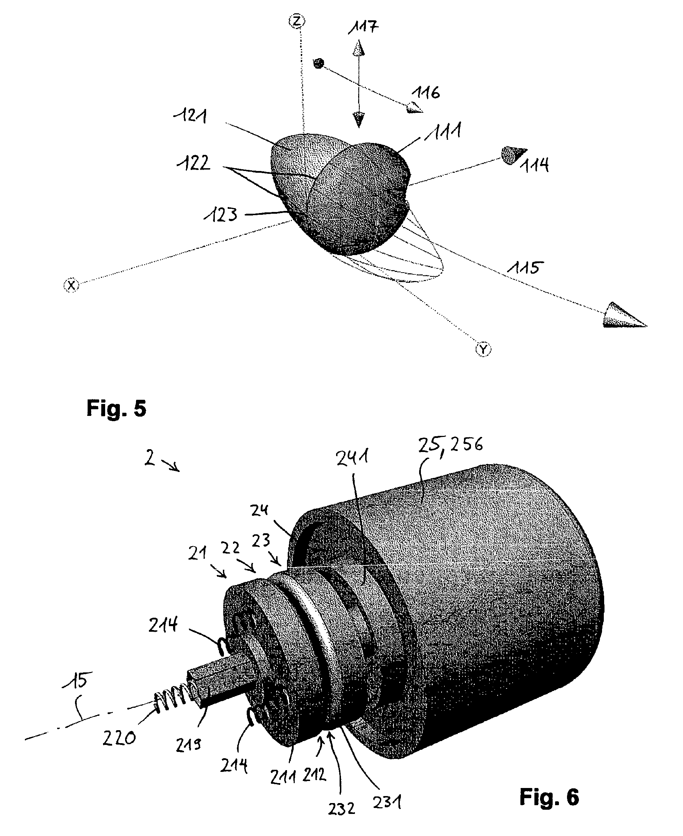

Die **Figuren 6** bis **9** zeigen die Elemente der Stelleinheit 2 in verschiedenen Ansichten. **Figur 6** zeigt eine Übersicht: Die Stelleinheit 2 weist ein Innenstück 21, ein Zwischenstück 23 und ein Aussenstück 25 auf. Das Innenstück 21 und Zwischenstück 23 sind mittels einer Innenkupplung 22 bedingt kraftschlüssig aneinander gekoppelt. Das Zwischenstück 23 und das Aussenstück 25 sind mittels einer Aussenkupplung 24 ebenfalls bedingt kraftschlüssig aneinander gekoppelt. "Bedingt kraftschlüssig" bedeutet, dass in der jeweiligen Kupplung im Normalfall Kräfte zur Verschiebung und/oder zur Drehung übertragen werden, wenn aber die Kräfte ein bestimmtes Mass überschreiten, die Kupplung auskuppelt und eine gegenseitige Bewegung der Kupplungspartner entsprechend diesen Kräften zulassen.

Das Innenstück 21 führt mit einer Innenwelle 219 in das Innere des Innengehäuses 11 hinein. Die Innenwelle 219 ist bei einer Uhr die Aufzugswelle, welche sowohl Drehbewegungen als auch Zug- und Druckkräfte der Uhrenkrone an das Uhrwerk überträgt. Die geometrische Achse der Innenwelle 219 wird im folgenden als *Wellenachse* 15 bezeichnet. Sie entspricht in der Ruhelage des Innengehäuses 11 auch der geometrischen Achse des Zwischenstückes 23 und des Aussenstückes 25. Die Innenwelle 219 kann eine Federung 220 aufweisen, welche insbesondere in Richtung der Wellenachse 15 Stösse abfedern kann, als Ergänzung zur Abfederung durch die Aussenkupplung 24.

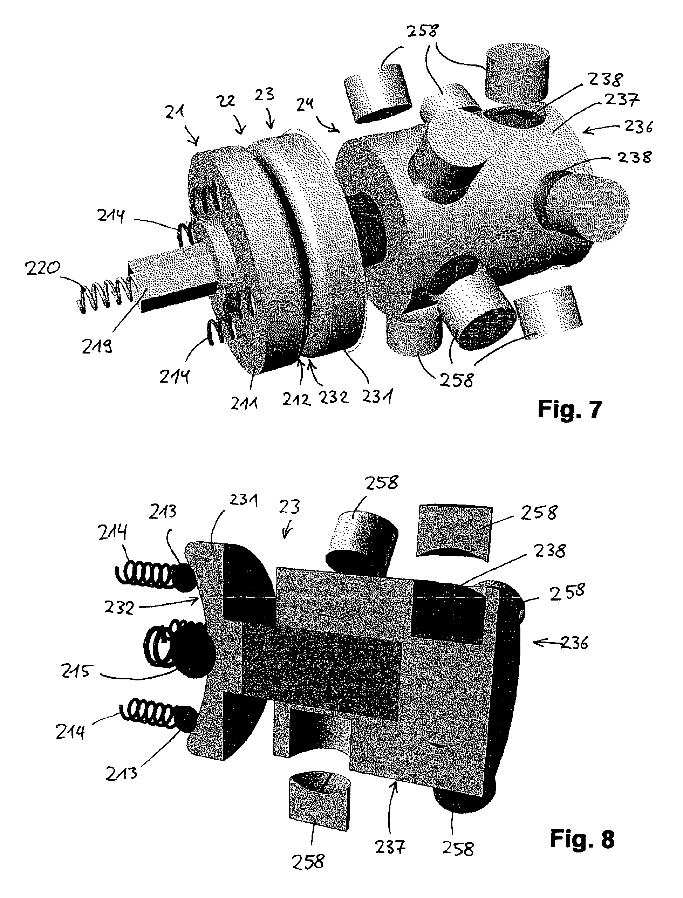

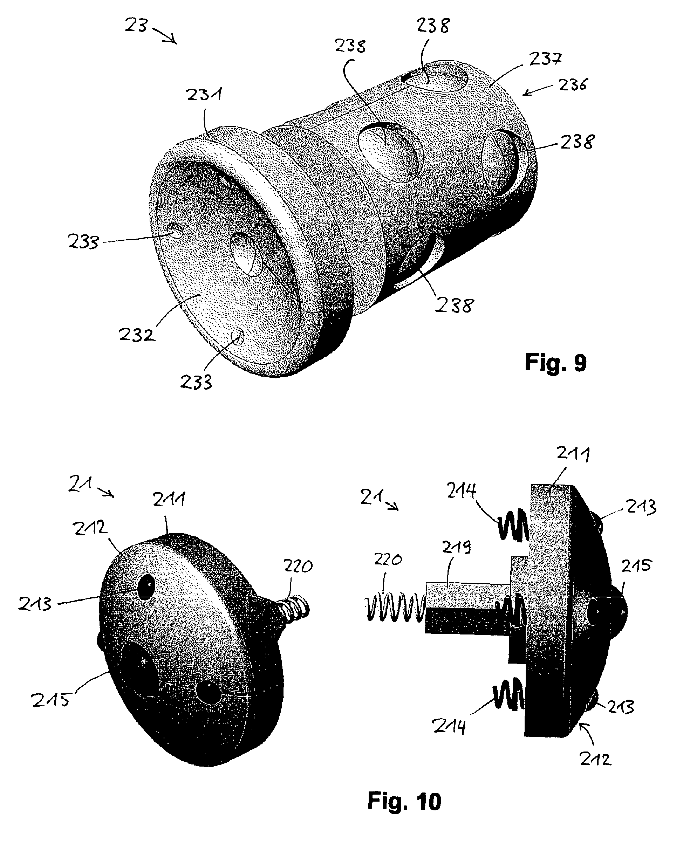

**Figur 7** zeigt dieselbe Ansicht wie **Figur 6****,** wobei einige Elemente entfernt sind, um die Funktion der Innenkupplung 22 und der Aussenkupplung 24 zu veranschaulichen. **Figur 8** zeigt Elemente der **Figur 7** in einem Längsschnitt, ohne das äussere Kupplungselement 231 der Innenkupplung, aber mit dessen Einrastkörpern 213, 215 und Einrastfedern 214.. **Figur 9** zeigt das Zwischenstück 23 für sich alleine, und **Figur 10** zeigt zwei Ansichten des Innenstücks 21.

**Zur Innenkupplung** 22: Das Innenstück 21 weist, fest mit der Innenwelle 219 verbunden, ein inneres Kupplungselement 211 der Innenkupplung, welches korrespondierend zu einem äusseren Kupplungselement 231 der Innenkupplung geformt und ausgebildet ist. Dabei ist eine innere Kupplungsfläche 212 der Innenkupplung einer äusseren Kupplungsfläche 232 der Innenkupplung gegenüberstehend angeordnet. Die innere Kupplungsfläche 212 der Innenkupplung ist nach aussen gewölbt und zumindest annähernd wie eine Kugelschale geformt, die äussere Kupplungsfläche 232 der Innenkupplung ist entsprechend nach innen gewölbt. Der Radius dieser beiden Kupplungsflächen 212, 232 ist vorzugsweise gleich dem Abstand zwischen dem Zentrum der Uhr, also dem Schwerpunkt des Innengehäuses und des Aussengehäuses, und den Kupplungsflächen 212, 232. Damit ist ein gegenseitiges Verdrehen der Kupplungsflächen 212, 232 um den gemeinsamen Schwerpunkt möglich.

In der inneren Kupplungsfläche 212 der Innenkupplung versenkt sind Einrastkörper 213 angeordnet, vorzugsweise in einer ringförmigen Anordnung um die Wellenachse 15. Die Einrastkörper 213 sind federnd mittels Einrastfedern 214 abgestützt, und können deshalb gegen die Federkraft in Richtung gegen die innere Kupplungsfläche 212 der Innenkupplung gedrückt werden. Die Einrastkörper 213 rasten in Einrastvertiefungen 233 des äusseren Kupplungselementes 231 der Innenkupplung ein. Vorzugsweise sind die Einrastkörper 213 aus magnetischem Material und ist das äussere Kupplungselement 231 der Innenkupplung aus einem ferromagnetischen Material.

Durch deren magnetische Anziehung werden das innere und das äussere Kupplungselement 211, 231 der Innenkupplung aneinander gehalten und können nebst Druckkräften auch Zugkräfte in Richtung der Wellenachse 15 übertragen. Das Zusammenwirken der Einrastkörper 213 mit den Einrastvertiefung 233 ermöglicht auch die Übertragung von Drehkräften respektive Drehbewegungen um die Wellenachse 15. Diese dienen beispielsweise zur Einstellung der Zeigerposition und zur Datumskorrektur.

In einer bevorzugten Ausführungsform der Erfindung liegt ein zentraler Einrastkörper 215 im inneren Kupplungselement 211 der Innenkupplung vor, welcher das äussere Kupplungselement 231 der Innenkupplung anzieht und die Übertragung von Zugkräften verbessert.

Bei einem Überschreiten einer bestimmten Zugkraft, typischerweise einer Beschleunigungskraft, in Richtung der Wellenachse 15 lösen sich das innere und das äussere Kupplungselement 211, 231 der Innenkupplung entgegen der Haltekraft der Magnete (Einrastkörper 213 und ggf. Zentralmagnet 215) voneinander.

Bei einem Überschreiten einer bestimmten Scherkraft senkrecht zur Wellenachse 15 rutschen die Einrastkörper 213 aus den Einrastvertiefungen 233 heraus, wobei die Einrastkörper 213 gegen die Kraft der Einrastfedern 214 in das innere Kupplungselement 211 der Innenkupplung gedrückt werden. Das innere und das äussere Kupplungselement 211, 231 der Innenkupplung bewegen sich mit einer Relativbewegung zur Wellenachse aus der Ruhelage voneinander weg. Dasselbe gilt beim Überschreiten eines bestimmten Drehmomentes um die Wellenachse 15, wobei sich die beiden Kupplungselemente um die Wellenachse 15 gegeneinander drehen.

Die Einrastfedern 214 können zwischen den Einrastkörpern 213 und dem inneren Kupplungselement 211 der Innenkupplung wirken. In der gezeigten bevorzugten

Ausführungsform der Erfindung wirken die Einrastfedern 214 zusätzlich auch zwischen den Einrastkörpern 213 und dem Innengehäuse 11, sind aber am inneren Kupplungselement 211 der Innenkupplung befestigt. Aufgrund dieser Befestigung wirken die Einrastfedern 214 wie zwei separate Federn. In einer anderen bevorzugten Ausführungsform der Erfindung liegen Einrastfedern 214 vor, welche nur die Einrastkörper 213 bezüglich des inneren Kupplungselementes 211 der Innenkupplung abfedern, und weitere Federn, beispielsweise auch Tellerfedern, welche das innere Kupplungselement 211 der Innenkupplung gegenüber dem Innengehäuse 11 in axialer Richtung entlang der Wellenachse 15 abfedern.

Diese Federung zwischen dem inneren Kupplungselement 211 der Innenkupplung und dem Innengehäuse 11 ist optional und ergänzt die Federung, welche mittels der Aussenkupplung 24 geschieht. Sie geht vorzugsweise einher mit einer (nicht eingezeicheten) in axialer Richtung gefederte Stelle entlang der Innenwelle 219.

**Zur Aussenkupplung** 24: Das Zwischenstück 23 weist an einem dem äusseren Kupplungselement 231 der Innenkupplung gegenüberliegenden Abschnitt ein inneres Kupplungselement 236 der Aussenkupplung auf. Dieses ist korrespondierend zu einem äusseren Kupplungselement 256 der Aussenkupplung geformt und ausgebildet. Dabei ist eine innere Kupplungsfläche 237 der Aussenkupplung einer äusseren Kupplungsfläche 257 der Aussenkupplung gegenüberstehend angeordnet. Die innere Kupplungsfläche 237 der Aussenkupplung ist rotationszylindrisch, die äussere Kupplungsfläche 257 der Aussenkupplung ist ein entsprechend geformter Innenzylinder (in den Figuren nicht sichtbar). Zwischen der inneren Kupplungsfläche 237 und der äusseren Kupplungsfläche 257 der Aussenkupplung kann ein magnetisch passiver Trennkörper 241 angeordnet sein, welcher das innere Kupplungselement 236 umschliesst und wasserdicht am Aussengehäuse 12 befestigt ist. Damit kann eine wasserdichte Kupplung erreicht werden, ohne dass eine Dichtung an einem bewegten Teil erforderlich ist.

Entlang des Umfangs des inneren Kupplungselementes 236 der Aussenkupplung sind innere Kupplungsmagnete 238 der Aussenkupplung angeordnet. Entsprechend sind um den inneren Umfang des äussere Kupplungselementes 256 der Aussenkupplung äussere Kupplungsmagnete 258 der Aussenkupplung angeordnet. Die Pole der inneren und äusseren Kupplungsmagnete 238, 258 der Aussenkupplung sind paarweise aufeinander ausgerichtet, so dass sie sich gegenseitig anziehen. Dadurch ist eine Drehbewegung um die Wellenachse 15 wie auch eine Translation entlang der Wellenachse 15 übertragbar. Zur Beabstandung der inneren und äusseren Kupplungsmagnete 238, 258 der Aussenkupplung und zum Lagern des äusseren Kupplungselementes 256 am inneren Kupplungselement 236 der Aussenkupplung 256 kann eine zylindrische Hülse, beispielsweise aus keramischen Material vorgesehen sein. Die Hülse kann am inneren oder am äusseren Kupplungselement befestigt sein. Alternativ kann anstelle der Hülse ein Luftspalt vorliegen, wobei die Lagerung dann durch Lagerelemente geschieht, welche nicht im Bereich der Magnete angeordnet sind.

Bei einem Überschreiten einer bestimmten Druckkraft in Richtung der Wellenachse 15 lösen sich das innere und das äussere Kupplungselement 236, 256 der Aussenkupplung entgegen der Haltekraft der Magnete (innere und äussere Kupplungsmagnete 238, 258) voneinander.

### BEZUGSZEICHENLISTE

- 1: Lagervorrichtung
- 11: Innengehäuse
- 111: Lagerkörper
- 112: Lagerfeder
- 113: Lagerstelle
- 114: erste Lagerachse
- 115: zweite Lagerachse
- 116: erste Richtung
- 117: zweite Richtung
- 118: Exzenterschraube
- 12: Aussengehäuse
- 121: Lagerfläche
- 122: Unstetigkeit
- 123: Ruhepunkt
- 13: stossempfindliche Einheit, Uhrwerk
- 14: Lager
- 15: Wellenachse
- 2: Stelleinheit
- 21: Innenstück
- 211: inneres Kupplungselement der Innenkupplung
- 212: innere Kupplungsfläche der Innenkupplung
- 213: Einrastkörper
- 214: Einrastfeder
- 215: Zentraler Einrastkörper
- 219: Innenwelle
- 220: Federung der Innenwelle
- 22: Innenkupplung (erste Kupplung)
- 23: Zwischenstück
- 231: äusseres Kupplungselement der Innenkupplung
- 232: äussere Kupplungsfläche der Innenkupplung
- 233: Einrastvertiefung
- 236: inneres Kupplungselement der Aussenkupplung
- 237: innere Kupplungsfläche der Aussenkupplung
- 238: innere Kupplungsmagnete der Aussenkupplung
- 24: Aussenkupplung (zweite Kupplung)
- 241: Trennkörper
- 25: Aussenstück
- 256: äusseres Kupplungselement der Aussenkupplung
- 257: äussere Kupplungsfläche der Aussenkupplung
- 258: äussere Kupplungsmagnete der Aussenkupplung

## Patentansprüche

1. Schockabsorbierende Lagervorrichtung (1) für Präzisionsinstrumente, mit einem Innengehäuse (11) zur Halterung einer stossempfindlichen Einheit (13) und mit einem Aussengehäuse (12) zur Lagerung des Innengehäuses (11), wobei das Innengehäuse (11) bezüglich des Aussengehäuses (12) bewegbar ist, und das Innengehäuse (11) bezüglich des Aussengehäuses (12) über Lager (14) gelagert ist,
**dadurch gekennzeichnet, dass** ein Lager (14) jeweils einen Lagerkörper (111) und eine Lagerfläche (121) aufweist, wobei
■ der Lagerkörper (111) und die Lagerfläche (121) einander berühren;
■ der Lagerkörper (111) und die Lagerfläche (121) relativ zueinander sowohl translatorisch als auch rotatorisch bewegbar sind;
■ der Lagerkörper (111) an einem ersten Gehäuseteil und die Lagerfläche (121) an einem zweiten Gehäuseteil angeordnet ist;
■ entweder der Lagerkörper (111) oder die Lagerfläche (121) oder beide jeweils federnd am entsprechenden Gehäuseteil angeordnet sind; und
■ entweder der erste Gehäuseteil gleich dem Innengehäuse (11) und der zweite Gehäuseteil gleich dem Aussengehäuse (12), oder der erste Gehäuseteil gleich dem Aussengehäuse (12) und der zweite Gehäuseteil gleich dem Innengehäuse (11) ist.

2. Schockabsorbierende Lagervorrichtung (1) gemäss Anspruch 1, wobei bei einer Bewegung der Lagerkörper (111) bezüglich der Lagerfläche (121) aus einer Ruhelage die federnde Anordnung von mindestens einem von Lagerkörper (111) und Lagerfläche (121) eine Rückstellkraft zurück in die Ruhelage bewirkt.

3. Schockabsorbierende Lagervorrichtung (1) gemäss Anspruch 1 oder 2, wobei in einem Lager (14) die Lagerfläche (121) eine schalenförmige Fläche aufweist, und der Lagerkörper (111) die Lagerfläche (121) an einer Lagerstelle (113) berührt und sich beim Bewegen der des Lagerkörpers (111) bezüglich der Lagerfläche (121) die Lagerstelle (113) auf der Lagerfläche (121).

4. Schockabsorbierende Lagervorrichtung (1) gemäss einem der vorangehenden Ansprüche, wobei der Lagerkörper (111) bezüglich des ersten Gehäuseteils um eine erste Lagerachse (114) linear verschiebbar gelagert ist

5. Schockabsorbierende Lagervorrichtung (1) gemäss einem der vorangehenden Ansprüche, wobei bei einem Lager (14)
- bei einer translatorischen Relativbewegung zwischen Lagerkörper (111) und Lagerfläche (121) in eine erste Richtung (116) senkrecht zur ersten Lagerachse (114) sich die Lagerstelle (113) entlang der ersten Richtung (116) verschiebt, und
- bei einer translatorischen Relativbewegung in eine zweite Richtung (117), welche senkrecht zur ersten Lagerachse (114) und senkrecht zur ersten Richtung (116) verläuft, sich die Lagerstelle (113) entlang der zweiten Richtung (117) verschiebt, und/oder sich der Lagerkörper (111) um die zweite Lagerachse (115) dreht.

6. Schockabsorbierende Lagervorrichtung (1) gemäss einem der vorangehenden Ansprüche, wobei ein Lagerkörper (111) am Bereich seiner Aussenfläche, der als Lager wirkt, die Form eines räumlichen Ellipsoids aufweist, insbesondere eines räumlichen Ellipsoids mit einer Rotationssymmetrie, wobei die entsprechende Symmetrieachse mit der zweiten Lagerachse (115) koinzidiert.

7. Schockabsorbierende Lagervorrichtung (1) gemäss einem der vorangehenden Ansprüche, aufweisend eine Stelleinheit (2), wobei die Stelleinheit (2) mit einem Innenstück (21) beweglich gelagert am Innengehäuse (11) angeordnet ist und mit einem Aussenstück (25) beweglich gelagert am Aussengehäuse (12) angeordnet ist, und
die Stelleinheit (2) zum Übertragen von Kräften und Bewegungen vom Aussenstück (25) an das Innenstück (21) und umgekehrt eingerichtet ist, wobei die Stelleinheit (2) eine Kupplungsvorrichtung (22, 24) aufweist, und
die Kupplungsvorrichtung (22, 24) dazu eingerichtet ist, falls eine zwischen Innenstück (21) und Aussenstück (25) wirkende Kraft ein bestimmtes Mass überschreitet, eine Verbindung zwischen Innenstück (21) und Aussenstück (25) zu lösen.

8. Schockabsorbierende Lagervorrichtung (1) gemäss Anspruch 7, wobei in einem eingekuppelten Zustand der Stelleinheit (2) eine Drehachse des Innenstückes (21) und eine Drehachse des Aussenstückes (25) miteinander und mit der Wellenachse (15) koinzidieren, und bei gelöster Verbindung zwischen Innenstück (21) und Aussenstück (25) die Drehachse des Innenstückes (21) und die Drehachse des Aussenstückes (25) nicht koinzidieren.

9. Schockabsorbierende Lagervorrichtung (1) gemäss einem der Ansprüche 7 oder 8, wobei die Stelleinheit (2) eine erste Kupplung (22) und eine zweite Kupplung (24) aufweist, die erste Kupplung (22) das Innenstück (21) an das Zwischenstück (23) koppelt, und die zweite Kupplung (24) das Zwischenstück (23) an das Aussenstück (25) koppelt, und
- sich die erste Kupplung (22) bei zu hohen Zugkräften entlang der Wellenachse (15) und bei zu hohen seitlichen Kräften senkrecht zur Wellenachse (15) löst, und
- sich die zweite Kupplung (24) bei zu hohen Druckkräften entlang der Wellenachse (15) löst.

10. Schockabsorbierende Lagervorrichtung (1) gemäss Anspruch 9, wobei die erste Kupplung (22) durch magnetische Anziehungskraft in Richtung der Wellenachse (15) zusammengehalten wird, insbesondere wobei ein inneres Kupplungselement (211) der Innenkupplung und ein äusseres Kupplungselement (231) der Innenkupplung einander gegenüberliegen und mindestes eines dieser beiden Kupplungselemente einen Permanentmagneten aufweist, der das gegenüberliegende Kupplungselement anzieht.

11. Schockabsorbierende Lagervorrichtung (1) gemäss einem der Ansprüche 9 oder 10, wobei die erste Kupplung (22) an einer ersten Kupplungsfläche (232; 212), Einrastelemente (213) aufweist, welche in Einrastvertiefungen (233) einer gegenüberliegenden zweiten Kupplungsfläche (212; 232) einrasten und welche sich bei zu hohen seitlichen Kräften senkrecht zur Wellenachse (15) lösen.

12. Schockabsorbierende Lagervorrichtung (1) gemäss Anspruch 11, wobei die Einrastelemente (213) federnd gelagert sind.

13. Schockabsorbierende Lagervorrichtung (1) gemäss einem der Ansprüche 11 oder 12, wobei die Einrastelemente Permanentmagnete sind oder Permanentmagnete aufweisen.

14. Schockabsorbierende Lagervorrichtung (1) gemäss einem der Ansprüche 11 bis 13, wobei die innere Kupplungsfläche der Innenkupplung (212) und die äussere Kupplungsfläche der Innenkupplung (232) die Form von Kugelsegmenten aufweisen, und vorzugsweise die beiden Flächen in der Ruhelage konzentrisch zueinander angeordnet sind und dabei vorzugsweise auch konzentrisch zum Mittelpunkt der Lager (14) der Lagervorrichtung (1) angeordnet sind.

15. Schockabsorbierende Lagervorrichtung (1) gemäss einem der Ansprüche 9 bis 14, wobei die zweite Kupplung (24) durch magnetische Anziehungskraft zusammengehalten ist, und vorzugsweise die innere Kupplungsfläche (237) der Aussenkupplung und die äussere Kupplungsfläche (257) der Aussenkupplung zueinander konzentrische und gegeneinander gerichtete Zylinderflächen aufweisen, und wobei die innere Kupplungsfläche (237) der Aussenkupplung an einem inneren Kupplungselement (236) der Aussenkupplung ausgebildet ist und die äussere Kupplungsfläche (257) der Aussenkupplung an einem äusseren Kupplungselement (256) der Aussenkupplung ausgebildet ist, und an den beiden Kupplungselementen (236, 256) der Aussenkupplung Permanentmagneten angeordnet sind, welche einen lösbaren magnetischen Kraftschluss zwischen den beiden Kupplungselementen bilden.
